# EUROPEAN PATENT APPLICATION

(11) **EP 4 530 065 A1**
(43) Date of publication of application: **02.04.2025**
(21) Application number: 23811611.5
(22) Date of filing: 10.05.2023
(51) Int. Cl.: B32B 27/10, B32B 27/36

(54) **LAYERED BODY, METHOD FOR PRODUCING SAME, AND MOLDED ARTICLE**

(30) Priority: 23.05.2022 JP 2022083676
(71) Applicant: Kaneka Corporation, Osaka-shi, Osaka 530-8288 (JP)
(72) Inventor: MURASHIMA, Kensuke, Osaka 566-0072 (JP); KUSAKABE, Itsuki, Osaka 566-0072 (JP); FUJITA, Masayuki, Osaka 566-0072 (JP); OKADA, Yasunori, Osaka 566-0072 (JP)
(74) Representative: Vossius & Partner Patentanwälte Rechtsanwälte mbB
(86) International application number: PCT/JP2023/017540
(87) International publication number: WO 2023/228736

(57) **Abstract**

A laminate includes, in order, a substrate layer (A), a bonding layer (B), and a resin layer (D) containing a poly(3-hydroxyalkanoate) copolymer (C). A glass transition temperature of a total resin material contained in the bonding layer (B) is from 20 to below 90°C, the bonding layer (B) has a weight per square meter of 0.1 to less than 5.0 g/m², and the resin layer (D) has a thickness of 5 to 100 µm.

## Description

### Technical Field

The present invention relates to: a laminate including a substrate layer such as paper and a resin layer located on at least one side of the substrate layer; a method for producing the laminate; and a molded article.

### Background Art

In recent years, environmental problems due to waste plastics have become an issue of great concern. In particular, waste plastics have caused serious marine pollution, and there is a demand for widespread use of biodegradable plastics which are degradable in the natural environment.

Various kinds of such biodegradable plastics are known. Poly(3-hydroxyalkanoate) copolymers (hereinafter also referred to as "P3HAs") are thermoplastic polyesters produced and accumulated as energy storage substances in the cells of many kinds of microorganisms and are biodegradable in seawater as well as in soil. For this reason, poly(3-hydroxyalkanoate) copolymers are drawing attention as materials that can be a solution to the above-mentioned problems.

A copolymer of 3-hydroxybutyrate (hereinafter also referred to as "3HB") and 3-hydroxyhexanoate (hereinafter also referred to as "3HH") is a poly(3-hydroxyalkanoate) copolymer (hereinafter also referred to as "PHBH"), and a PHBH/paper composite having this copolymer combined with a substrate such as paper is attracting an especially high level of social interest because the composite can be used to make, for example, an environmentally friendly food contact container.

Examples of techniques for combining PHBH and paper together include an extrusion lamination method and a coating method using an aqueous slurry. The extrusion lamination method is preferred since, for example, the coating method has difficulty achieving sufficient mechanical strength of the resin layer. However, PHBH generally has a high melt viscosity and a low ability to penetrate into paper; thus, it is not easy to bond melt-extruded PHBH strongly enough to paper. Consequently, the lamination layer peels from the paper during a production process of a cup-shaped molded article such as a drinking cup, and filling the cup-shaped molded article with a substance results in leakage of the substance from the cup-shaped molded article.

Patent Literature 1, which does not disclose PHBH, aims to improve the penetration of a biodegradable resin into paper and enhance the lamination strength between the biodegradable resin and the paper and discloses a method in which a dispersion or an emulsion of polycaprolactone is applied to paper at a weight per square meter (dry weight of layer) of 10 g/m², the applied layer of dispersion or emulsion is dried, and then a layer of 3-hydroxybutyrate-3-hydroxyvalerate copolymer (PHBV) is formed on the dried layer by extrusion lamination.

### Citation List

### Patent Literature

PTL 1: Japanese Laid-Open Patent Application Publication No. H6-293113

### Summary of Invention

### Technical Problem

The method of Patent Literature 1 tends to achieve improved adhesion between the paper and the resin layer but has some disadvantages. For example, a layer of dispersion or emulsion of polycaprolactone needs to be dried after being applied at a weight per square meter as large as 10 g/m², and this drying requires a lot of time and results in low productivity. Additionally, the drying deteriorates the quality of the paper substrate or leads to the paper being so extremely dry as to cause warping of the laminate.

One approach to facilitating the drying may be to reduce the weight per square meter of the bonding layer to below 10 g/m². However, this approach has the disadvantage of resulting in insufficient adhesion between the paper substrate and the resin layer.

In view of the above circumstances, the present invention aims to provide a laminate including, in order, a substrate layer, a bonding layer, and a resin layer containing a poly(3-hydroxyalkanoate) copolymer, the laminate being characterized by good drying properties during formation of the bonding layer and high adhesion between the substrate layer and the resin layer.

### Solution to Problem

As a result of intensive studies with the goal of solving the above problem, the present inventors have found that a laminate including, in order, a substrate layer, a bonding layer, and a resin layer containing a poly(3-hydroxyalkanoate) copolymer can be a solution to the problem when the weight per square meter of the bonding layer is sufficiently reduced, the glass transition temperature of the total resin material contained in the bonding layer is adjusted within a given range, and the thickness of the resin layer is set to a given range. Based on this finding, the inventors have completed the present invention.

Specifically, the present invention relates to a laminate including, in order, a substrate layer (A), a bonding layer (B), and a resin layer (D) containing a poly(3-hydroxyalkanoate) copolymer (C), wherein
a glass transition temperature of a total resin material contained in the bonding layer (B) is from 20 to below 90°C,
the bonding layer (B) has a weight per square meter of 0.1 to less than 5.0 g/m², and
the resin layer (D) has a thickness of 5 to 100 µm.

The present invention also relates to a laminate production method for producing the laminate as defined above, the method including:
forming the bonding layer (B) on at least one side of the substrate layer (A); and
forming the resin layer (D) on a surface of the bonding layer (B) by extrusion lamination or thermal lamination.

The present invention further relates to a molded article including the laminate as defined above.

### Advantageous Effects of Invention

The present invention can provide a laminate including, in order, a substrate layer, a bonding layer, and a resin layer containing a poly(3-hydroxyalkanoate) copolymer, the laminate being characterized by good drying properties during formation of the bonding layer and high adhesion between the substrate layer and the resin layer. The use of this laminate in production of a molded article can improve the production efficiency or the quality of the molded article.

### Brief Description of Drawings

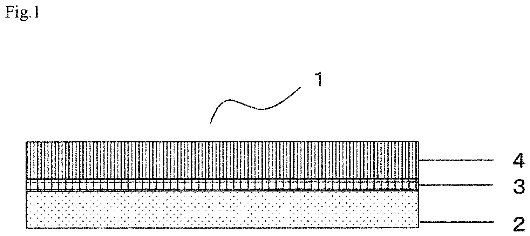

FIG. 1 is a schematic view showing the arrangement of the layers of a laminate according to an exemplary embodiment.

### Description of Embodiments

Hereinafter, embodiments of the present invention will be described. The present invention is not limited to the embodiments described below.

### [Laminate]

A laminate according to one embodiment of the present invention includes a substrate layer (A), a bonding layer (B), and a resin layer (D) containing a poly(3-hydroxyalkanoate) copolymer (C), and the bonding layer (B) and the resin layer (D) are located on at least one side of the substrate layer (A). In a laminate 1, as shown in FIG. 1, the substrate layer (A) denoted by the reference sign 2, the bonding layer (B) denoted by the reference sign 3, and the resin layer (D) denoted by the reference sign 4 are arranged in this order.

The bonding layer (B) may be located directly on the substrate layer (A) or there may be another layer between the bonding layer (B) and the substrate layer (A) to the extent that the other layer does not diminish the adhesion between the layers (A) and (B).

The resin layer (D) may be an outermost layer exposed on the surface of the laminate. Alternatively, another layer may be located on the resin layer (D) in order to, for example, impart water resistance or gloss to the laminate.

The bonding layer (B) and the resin layer (D) may be present only on one side of the substrate layer (A) or on both sides of the substrate layer (A).

In the case where the bonding layer (B) and the resin layer (D) are present only on one side of the substrate layer (A), there may be no other layer on the other side of the substrate layer (A), and the substrate layer (A) may be an outermost layer exposed on the surface of the laminate. Alternatively, another layer may be located on the other side of the substrate layer (A) in order to, for example, impart water resistance, gloss, or adhesiveness to the laminate.

In the case where the bonding layer (B) and the resin layer (D) are present on both sides of the substrate layer (A), the bonding layer (B) on one side and the bonding layer (B) on the other side may be identical or different in material, weight per square meter, or thickness. The same can be said for the resin layer (D) on the one side and the resin layer (D) on the other side. In the present application, the weight per square meter (g/m²) of a layer refers to the dry weight (solids weight) of the layer.

### [Substrate Layer (A)]

The material of the substrate layer (A) is not limited to a particular type but is desirably biodegradable. Examples of the substrate layer (A) include a layer of paper (whose main component is cellulose), a layer of cellophane, a layer of cellulose ester, a layer of polyvinyl alcohol, a layer of polyamino acid, a layer of polyglycolic acid, a layer of pullulan, and any of these substrates on which an inorganic substance such as aluminum or silica is vapor-deposited. A layer of paper is preferred since it has high heat resistance and is inexpensive.

The paper is not limited to a particular type and may be any paper selected depending on the intended use of the laminate. Examples of the paper include cup paper, kraft paper, high-quality paper, coated paper, tissue paper, glassine paper, and paperboard. Additives such as a waterproofing agent, a water repellent, and an inorganic substance may be added to the paper as necessary. The paper may be surface-treated to have an oxygen barrier coating or a water vapor barrier coating.

The substrate layer (A) may be subjected to a surface treatment such as corona treatment, ozone treatment, plasma treatment, flame treatment, or anchor coat treatment or may be surface-treated to have an oxygen barrier coating or a water vapor barrier coating. One of such surface treatments may be performed alone, or two or more surface treatments may be used in combination.

### [Bonding Layer (B)]

The bonding layer (B) is a layer containing a resin as a main component. The main resin contained in the bonding layer (B) is not limited to a particular type, and any resin commonly used in the field of coated paper or resin films can be suitably used as the main resin. Resins having high affinity for the substrate such as paper and P3HAs are preferred, and examples of such resins include acrylic resins, vinyl chloride resins, styrene-acrylic resins, styrene-butadiene resins, styrene-isoprene resins, polycarbonate resins, urea resins, melamine resins, epoxy resins, phenol resins, urethane resins, diallyl phthalate resins, and imine resins. One of these resins may be used alone, or two or more of these resins may be mixed in any proportions.

In particular, in view of high affinity for P3HAs, the bonding layer (B) preferably contains at least an acrylic resin or a styrene-acrylic resin.

The bonding layer (B) preferably contains the above-described main resin(s) in a (total) amount of 50 wt% or more, more preferably 60 wt% or more, even more preferably 70 wt% or more, particularly preferably 80 wt% or more, based on the total weight of the bonding layer (B). The (total) amount of the main resin(s) is up to 100 wt% and may be 99 wt% or less.

In the case where the bonding layer (B) contains either an acrylic resin or a styrene-acrylic resin, the proportion of styrene units in the total acrylic or styrene-acrylic resin is preferably from 0 to less than 50 mol%. When the proportion of the styrene units is less than 50 mol%, the glass transition temperature (hereinafter also referred to as "Tg") of the resin can be easily adjusted to below 90°C and, in addition, the affinity of the bonding layer (B) for P3HAs can be improved to further enhance the interlayer adhesion of the laminate. The proportion of the styrene units is more preferably 40 mol% or less, even more preferably 30 mol% or less, and particularly preferably 20 mol% or less.

In the case where the bonding layer (B) contains either an acrylic resin or a styrene-acrylic resin, the proportion of methyl methacrylate (hereinafter also referred to as "MMA") units in (meth)acrylic units contained in the total acrylic or styrene-acrylic resin is preferably from 50 to less than 95 mol%. The (meth)acrylic units refer to acrylic monomer units and methacrylic monomer units constituting the resin.

When the proportion of the MMA units is 50 mol% or more, the Tg of the resin can be easily adjusted to 20°C or above, and the interlayer adhesion of the laminate can be further enhanced. The proportion of the MMA units is more preferably 60 mol% or more, even more preferably 70 mol% or more, and particularly preferably 80 mol% or more. When the proportion of the MMA units is less than 95 mol%, the Tg of the resin can be easily adjusted to below 90°C, and the interlayer adhesion of the laminate can be enhanced.

The acrylic resin or styrene-acrylic resin may contain structural units other than the styrene units and the MMA units, and the monomer component from which the other structural units are derived is not limited to a particular monomer. A monomer component having good affinity for P3HAs is preferred, and specific examples of such a monomer component include acrylic acid, methacrylic acid, acrylic esters, and methacrylic esters.

In terms of ensuring that the Tg of the resin falls within in the suitable range, the use of methacrylic acid and/or a methacrylic ester is preferred, and the combined use of methacrylic acid and a methacrylic ester is particularly preferred.

Specific examples of methacrylic esters other than MMA include: methacrylic alkyl esters such as ethyl methacrylate, propyl methacrylate, isopropyl methacrylate, butyl methacrylate, isobutyl methacrylate, *tert*-butyl methacrylate, 2-ethylhexyl methacrylate, lauryl methacrylate, alkyl methacrylates, stearyl methacrylate, and cyclohexyl methacrylate; and other methacrylic esters such as phenyl methacrylate, benzyl methacrylate, isobornyl methacrylate, glycidyl methacrylate, tetrahydrofurfuryl methacrylate, allyl methacrylate, 2-hydroxyethyl methacrylate, 2-hydroxypropyl methacrylate, 2-methoxyethyl methacrylate, and 2-ethoxyethyl methacrylate. One of these methacrylic esters may be used alone, or two or more thereof may be used in combination as necessary.

The Tg of the main resin contained in the bonding layer (B) is not limited to a particular range but is preferably in such a range that the Tg of the total resin material contained in the bonding layer (B) (the Tg of the total resin material will be described later) meets the requirement. In view of this, the Tg of the main resin contained in the bonding layer (B) is preferably from 20 to below 90°C, more preferably from 25 to below 85°C, and even more preferably from 30 to below 80°C.

The main resin contained in the bonding layer (B) may be soluble in water or soluble in organic solvents. When the main resin used is insoluble in water, an additive can be added to improve the dispersibility in water and the ease of application of coating. In the case where an aqueous emulsion, an aqueous slurry, or a water-soluble resin is applied as a coating, the resin solids concentration is not limited to a particular range but is preferably 30 wt% or more, more preferably 40 wt% or more, and even more preferably 50 wt% or more to reduce the amount of heat required to dry the applied coating. In terms of avoiding sedimentation of the dispersed resin and achieving high ease of application of coating, the solids concentration is preferably 60 wt% or less.

The bonding layer (B) may contain only the main resin as a resin component or may further contain a tackifying resin in addition to the main resin. The use of the tackifying resin can lower the Tg of the total resin material contained in the bonding layer (B), leading to further enhancement of the interlayer adhesion of the laminate.

The tackifying resin used is not limited to a particular type and can be any commonly used tackifying resin. The tackifying resin may be solid or liquid at room temperature. Specifically, a rosin resin, a terpene resin, an ethylene resin, a vinyl acetate resin, an alkylphenol-formaldehyde resin, an alkylphenol-acetylene resin, a coumarone-indene resin, a styrene resin, or a xylene-formaldehyde resin can be preferably used. One of these resins may be used alone, or two or more thereof may be used in combination. In particular, a rosin resin is preferred.

The weight-average molecular weight (Mw) of the tackifying resin can be chosen as appropriate. In terms of the interlayer adhesion-enhancing effect, the weight-average molecular weight of the tackifying resin is preferably from 100 to less than 5,000, more preferably from 200 to 3,000, even more preferably from 300 to 2,000, and particularly preferably from 400 to 1,000.

The weight-average molecular weight of the tackifying resin can be measured as a polystyrene-equivalent molecular weight by gel permeation chromatography (HPLC GPC system manufactured by Shimadzu Corporation) using a chloroform solution of the tackifying resin. The column used in the gel permeation chromatography may be any column suitable for weight-average molecular weight measurement.

In the case where the bonding layer (B) contains a tackifying resin, it is preferable, in terms of the interlayer adhesion-enhancing effect, that the amount of the tackifying resin be from 1 to less than 30 wt%, more preferably from 3 to 25 wt%, and even more preferably 5 to 20 wt%, based on the total weight of the bonding layer (B). In particular, when the amount of the tackifying resin is 10 wt% or more, the interlayer adhesion of the laminate can be particularly high.

The Tg of the total resin material contained in the bonding layer (B) is controlled in the range of 20 to below 90°C in terms of ensuring the adhesion between the substrate layer (A) and the resin layer (D). If the Tg of the total resin material contained in the bonding layer (B) is below 20°C, the bonding layer (B) is too sticky at around room temperature, and the interlayer adhesion could be insufficient. If the Tg is 90°C or above, the amount of heat applied in a lamination process for forming the resin layer (D) could be inadequate depending on the resin temperature during the lamination process, and the lamination strength could be insufficient.

The Tg of the total resin material contained in the bonding layer (B) is preferably from 25 to below 85°C and even more preferably from 30 to below 80°C. The Tg may be up to 75°C, up to 70°C, or up to 65°C. The Tg may be at least 40°C, at least 50°C, or at least 60°C.

In the case where the bonding layer (B) contains only the main resin as a resin component, the Tg of the total resin material contained in the bonding layer (B) means the Tg of the main resin. In the case where the bonding layer (B) contains the main resin and the tackifying resin, the Tg of the total resin material contained in the bonding layer (B) means the Tg exhibited by the main and tackifying resins as a whole.

The Tg of the total resin material contained in the bonding layer (B) can be measured by differential thermal analysis.

In the laminate according to the present embodiment, the weight per square meter of the bonding layer (B) is adjusted in the range of 0.1 to less than 5.0 g/m². If the weight per square meter is less than 0.1 g/m², the adhesion of the bonding layer (B) to the resin layer (D) could be low. If the weight per square meter is 5.0 g/m² or more, drying of the bonding layer (B) requires a lot of heat and thus imposes a heavy burden on the equipment used or, for example, insufficient drying could cause blocking during winding of a laminate web.

The weight per square meter is preferably from 0.5 to 4.0 g/m², more preferably from 0.8 to 3.0 g/m², and even more preferably from 1.0 to 2.5 g/m².

### [Resin Layer (D)]

The resin layer (D) contains a poly(3-hydroxyalkanoate) copolymer (hereinafter also referred to as "P3HA") (C). The resin layer (D) may be an outermost layer of the laminate according to the present embodiment; in that case, the resin layer (D) can be used for heat sealing (described later).

The poly(3-hydroxyalkanoate) copolymer (C) is a biodegradable aliphatic polyester (preferably a polyester containing no aromatic ring) and contains at least one type or two or more types of 3-hydroxyalkanoate units. The 3-hydroxyalkanoate units are preferably represented by the following formula (1).

[-CHR-CH₂-CO-O-] (1)

In the formula (1), R is an alkyl group represented by CₚH₂ₚ₊₁ and p is an integer from 1 to 15. Examples of R include linear or branched alkyl groups such as methyl, ethyl, propyl, methylpropyl, butyl, isobutyl, t-butyl, pentyl, and hexyl groups. The integer p is preferably from 1 to 10 and more preferably from 1 to 8.

The poly(3-hydroxyalkanoate) copolymer (C) preferably contains 50 mol% or more, more preferably 60 mol% or more, even more preferably 70 mol% or more, of 3-hydroxyalkanoate units (in particular, the units represented by the formula (1)) in the total structural units (monomer units). The poly(3-hydroxyalkanoate) copolymer may contain only two or more types of 3-hydroxyalkanoate units as polymer structural units or may contain one type or two or more types of 3-hydroxyalkanoate units and further contain other units (e.g., 4-hydroxyalkanoate units).

The poly(3-hydroxyalkanoate) copolymer (C) is preferably a copolymer containing 3-hydroxybutyrate (hereinafter also referred to as "3HB") units and other hydroxyalkanoate units.

The other hydroxyalkanoate units may be 3-hydroxyalkanoate units other than 3HB units or may be hydroxyalkanoate units (e.g., 4-hydroxyalkanoate units) other than 3-hydroxyalkanoate units. The other hydroxyalkanoate units may be only one type of hydroxyalkanoate units or may include two or more types of hydroxyalkanoate units.

Specific examples of the poly(3-hydroxyalkanoate) copolymer (C) include
poly(3-hydroxybutyrate-co-3-hydroxypropionate),
poly(3-hydroxybutyrate-co-3-hydroxyvalerate) abbreviated as "PHBV",
poly(3-hydroxybutyrate-co-3-hydroxyvalerate-co-3-hydroxyhexanoate),
poly(3-hydroxybutyrate-co-3-hydroxyhexanoate) abbreviated as "PHBH",
poly(3-hydroxybutyrate-co-3-hydroxyheptanoate),
poly(3-hydroxybutyrate-co-3-hydroxyoctanoate),
poly(3-hydroxybutyrate-co-3-hydroxynonanoate),
poly(3-hydroxybutyrate-co-3-hydroxydecanoate),
poly(3-hydroxybutyrate-co-3-hydroxyundecanoate), and
poly(3-hydroxybutyrate-co-4-hydroxybutyrate) abbreviated as "P3HB4HB". In particular, in terms of factors such as the producibility and the mechanical properties of the resin composition, PHBH or P3HB4HB is preferred and PHBH is particularly preferred.

PHBH is a plastic particularly useful for industrial purposes because its melting point and crystallinity can be changed by varying the proportions of the repeating units, and thus the physical properties such as Young's modulus and heat resistance can be easily adjusted and can be controlled to levels intermediate between those of polypropylene and polyethylene.

A specific method for producing PHBH is described, for example, in WO 2010/013483. Examples of commercially-available PHBH include "Kaneka Biodegradable Polymer Green Planet^{™}" of Kaneka Corporation.

The average content ratio between the constituent monomers (3HB/3HH) in PHBH is preferably from 97 to 80/3 to 20 (mol%/mol%) and more preferably from 94 to 82/6 to 18 (mol%/mol%). When the average 3HH content in PHBH is 3 mol% or more, the interlayer adhesion of the laminate can be further enhanced. When the average 3HH content is 20 mol% or less, the crystallization rate of PHBH is not too low, and the production of PHBH is relatively easy.

The average content ratio between the constituent monomers in PHBH refers to the molar ratio between 3HB and 3HH contained in PHBH. When a PHBH resin is a mixture of at least two types of PHBH differing in the contents of the constituent monomers or a mixture containing at least one type of PHBH and PHB, the average content ratio refers to the molar ratio between the constituent monomers contained in the total mixture. The average content ratio between the constituent monomers can be determined by a method known to those skilled in the art, such as a method described in paragraph [0047] of WO 2013/147139 or by NMR analysis.

As stated above, the resin layer (D) may contain at least two types of PHBH differing in the contents of the constituent monomers or may contain at least one type of PHBH and further contain PHB (homopolymer of 3-hydroxybutyrate).

In the case where the resin layer (D) contains at least two types of PHBH, the at least two types of PHBH preferably include high-crystallinity, high-melting-point PHBH having a 3HH content of less than 6 mol% and low-crystallinity, low-melting-point PHBH having a 3HH content of 15 mol% or more.

The resin layer (D) is preferably a resin layer containing PHBH as a main component. Specifically, the amount of PHBH in the resin layer (D) is preferably from 50 to 100 wt%, more preferably from 70 to 100 wt%, and even more preferably from 80 to 100 wt%. The amount of PHBH may be at least 90 wt% or at least 95 wt%.

The resin layer (D) may contain only PHBH or only PHBH and PHB as resin components or may further contain a resin other than PHBH and PHB. The resin other than

PHBH and PHB is preferably a biodegradable resin, and specific examples of the other resin include: poly(3-hydroxyalkanoates) such as poly(3-hydroxybutyrate-co-3-hydroxyvalerate)
(PHB3HV), poly(3-hydroxybutyrate-co-4-hydroxybutyrate) (PHB4HB),
poly(3-hydroxybutyrate-co-3-hydroxyoctanoate) (PHB3HO),
poly(3-hydroxybutyrate-co-3-hydroxyoctadecanoate) (PHB3HOD),
poly(3-hydroxybutyrate-co-3-hydroxydecanoate) (PHB3HD), and
poly(3-hydroxybutyrate-co-3-hydroxyvalerate-co-3-hydroxyhexanoate) (PHB3HV3HH); aliphatic polyester resins such as polycaprolactone, polybutylene succinate adipate, polybutylene succinate, and polylactic acid; and aliphatic-aromatic polyester resins such as polybutylene adipate terephthalate and polybutylene azelate terephthalate. One of these resins other than PHBH and PHB may be used alone, or two or more thereof may be used in combination.

The resin layer (D) may contain additives usually added to resin materials, to the extent that the additives do not diminish the effect of the invention. Examples of such additives include: inorganic fillers; colorants such as pigments and dyes; odor absorbers such as activated carbon and zeolite; flavors such as vanillin and dextrin; plasticizers; oxidation inhibitors; antioxidants; weathering resistance improvers; ultraviolet absorbers; nucleating agents; lubricants; mold releases; water repellents; antimicrobials; and slidability improvers. One of these additives may be used alone, or two or more thereof may be used in combination. The additives are optional components, and the resin layer (D) need not contain these additives. Among the additives, a lubricant and/or an inorganic filler is preferably used to improve the separability of the resin layer (D) from the surface of pressure bonding means such as a cooling roll used in a lamination process for forming the resin layer (D).

Examples of the lubricant include: aliphatic amide compounds, as exemplified by saturated or unsaturated fatty acid amides such as lauramide, myristamide, palmitamide, stearamide, behenamide, oleamide, and erucamide and alkylene fatty acid amides such as methylene bis(stearamide) and methylene bis(stearamide); and pentaerythritol.

The amount of the lubricant in the resin layer (D) is preferably from 0.1 to 2 parts by weight and more preferably from 0.2 to 1 parts by weight per 100 parts by weight of the (total) amount of the resin component(s) contained in the resin layer (D). When the amount of the lubricant is 0.1 parts by weight or more, the addition of the lubricant can provide the separability improving effect. When the amount of the lubricant is 2 parts by weight or less, bleeding and attachment of the lubricant to the surface of pressure bonding means such as a cooling roll can be avoided during pressure bonding, and continuous processing can be performed for a long period of time.

Examples of the inorganic filler include talc, calcium carbonate, mica, silica, clay, kaolin, titanium oxide, alumina, and zeolite. The average particle size of the inorganic filler is preferably 0.5 µm or more.

The amount of the inorganic filler in the resin layer (D) is preferably from 0.5 to 5 parts by weight and more preferably from 1 to 3 parts by weight per 100 parts by weight of the (total) amount of the resin component(s) contained in the resin layer (D). When the amount of the inorganic filler is 0.5 parts by weight or more, the addition of the inorganic filler can provide the separability improving effect. When the amount of the inorganic filler is 5 parts by weight or less, cracking of the resin layer (D) can be avoided.

In the laminate according to the present embodiment, the thickness of the resin layer (D) is set in the range of 5 to 100 µm. If the thickness of the resin layer (D) is less than 5 µm, the resin cools too fast during a lamination process for forming the resin layer (D), with the result that the resin layer (D) could have low adhesion to the substrate layer (A) with the bonding layer (B) formed thereon. Additionally, the resin layer (D) would be likely to crack during processing of the laminate into a molded article. The thickness of the resin layer (D) is preferably at least 10 µm and more preferably at least 20 µm.

If the thickness of the resin layer (D) is more than 100 µm, there is a large variation in resin temperature during formation of the resin layer (D), and this could result in melt fracture leading to an uneven thickness or appearance defect of the resin layer (D). Additionally, the laminate would be extremely hard, and the hardness of the laminate could cause a molding defect. The thickness of the resin layer (D) is preferably up to 80 µm and more preferably up to 60 µm.

### [Method for Producing Laminate]

The following will describe an exemplary method for producing the laminate according to the present embodiment.

The laminate according to the present embodiment can be produced by forming the bonding layer (B) on at least one side of the substrate layer (A) (first step) and forming the resin layer (D) on the surface of the formed bonding layer (B) (second step).

Preferably, in the first step of forming the bonding layer (B) on at least one side of the substrate layer (A), a solution containing the component(s) of the bonding layer (B) or an aqueous dispersion such as an aqueous slurry containing the component(s) of the bonding layer (B) is applied to one side or both sides of the substrate layer (A), and the applied solution or aqueous dispersion is dried by heating to form a dry layer.

The application of the solution or the aqueous dispersion to the substrate is not limited to using a particular technique, and any known technique for forming a resin layer on a substrate can be used as appropriate. Specifically, a spray method, a spreading method, a slit coater method, an air knife coater method, a roll coater method, a bar coater method, a comma coater method, a blade coater method, a screen printing method, or a gravure printing method can be used. The application of the solution or the aqueous dispersion may be preceded by the step of subjecting the substrate to a surface treatment such as corona treatment as mentioned above.

The post-application drying can be performed using a known heating technique. Examples of the heating technique include hot air heating, infrared heating, microwave heating, roll heating, and hot plate heating. One of these techniques may be used alone, or two or more thereof may be used in combination.

The above step is followed by the second step of forming the resin layer (D) on the surface of the formed bonding layer (B). The resin layer (D) may be formed by applying a solution or an aqueous dispersion containing the component(s) of the resin layer (D) to the surface of the bonding layer (B) and drying the applied solution or dispersion by heating to form a dry layer. However, in terms of the adhesion to the bonding layer (B), the productivity, or the prevention of thermal deterioration, the resin layer (D) is preferably formed on the surface of the bonding layer (B) by extrusion lamination or thermal lamination.

The extrusion lamination can be performed using a common extrusion lamination method. Specifically, a molten resin material is extruded as a film from a T-die, then the extruded resin material is cooled and simultaneously pressure-bonded to the surface of the bonding layer (B) by means of a cooling roll, and immediately after the pressure bonding the resin material is separated from the cooling roll. In this manner, the resin layer (D) can be formed to produce the laminate.

In the case where the resin layer (D) is formed by the extrusion lamination, the resin temperature immediately after melt extrusion from the end of the T-die is preferably at or above the melting point(s) of the component(s) contained in the resin layer (D) and below 165°C.

The thermal lamination can be performed using a common thermal lamination method. Specifically, first, a molten resin material is extruded, for example, from a T-die, and the extruded resin material is cooled by means of a cooling roll to form a film containing the resin material. The obtained film is subsequently pressure-bonded to the surface of the bonding layer (B) by means such as a heat roll, and thus a molded article can be produced.

In the case where the resin layer (D) is formed by the thermal lamination, it is preferable that, in the formation of the film used to form the resin layer (D), the resin temperature immediately after melt extrusion from the end of the T-die be at or above the melting point(s) of the component(s) contained in the resin layer (D) and below 165°C.

In order to, for example, enhance the adhesion between the resin layer (D) and the substrate layer (A) with the bonding layer (B) formed thereon, the surface of the bonding layer (B) may be subjected to a treatment such as corona treatment, flame treatment, or ozone treatment.

In terms of the adhesion or processability (balance of melting and crystallization), the first and second steps described above are preferably performed sequentially and continuously.

### [Molded Article]

A molded article according to one aspect of the present embodiment includes the laminate described above and has a desired size and shape. Being made with the laminate including the resin layer (D) containing a P3HA, the molded article is advantageous for various uses.

The molded article is not limited to a particular product and may be any product including the laminate described above. Examples of the molded article include paper, a film, a sheet, a tube, a plate, a rod, a container (e.g., a bottle), a bag, and a part. In terms of addressing marine pollution, the molded article is preferably a bag or a bottle.

The molded article may be the laminate itself or may be one produced by secondary processing of the laminate.

The molded article including the laminate subjected to secondary processing is suitable for use as any of various kinds of packaging materials or containers such as shopping bags, various other kinds of bags, packaging materials for foods or confectionery products, cups, trays, and cartons. That is, the molded article is suitable for use in various fields such as food industry, cosmetic industry, electronic industry, medical industry, and pharmaceutical industry. Since the molded article includes the resin layer (D) having high adhesion to the substrate and having satisfactory heat resistance, the molded article is more suitable for use as a container for a hot substance. Examples of such a container include: liquid containers such as, in particular, cups for foods or beverages such as instant noodles, instant soups, and coffee; and trays used for prepared foods, boxed lunches, or microwavable foods.

The secondary processing can be performed using a method identical to that used for secondary processing of conventional resin-laminated paper or coated paper. That is, the secondary processing can be performed by means such as any kind of bag-making machine or form-fill-seal machine. Alternatively, the laminate may be processed using a device such as a paper cup molding machine, a punching machine, or a case former. In any of these processing machines, any known technique can be used for bonding of the laminate. Examples of the technique that can be used include heat sealing, impulse sealing, ultrasonic sealing, high-frequency sealing, hot air sealing, and flame sealing.

The heat sealing temperature at which the laminate is heat-sealed depends on the bonding technique used. For example, in the case where the laminate is heat-sealed using a heat sealing tester equipped with a sealing bar, the heat sealing temperature is set so that the resin temperature is typically 180°C or lower, preferably 170°C or lower, and more preferably 160°C or lower. When the resin temperature is in this range, melting and leakage of the resin in the vicinity of the sealed portion can be avoided to ensure a suitable thickness of the resin layer and a suitable seal strength. In the case of using a heat sealing tester equipped with a sealing bar, the resin temperature is typically at least 100°C, preferably at least 110°C, and more preferably at least 120°C. When the resin temperature is in this range, suitable bonding can be ensured at the sealed portion.

The heat sealing pressure at which the laminate is heat-sealed depends on the bonding technique used. For example, in the case where the laminate is heat-sealed using a heat sealing tester equipped with a sealing bar, the heat sealing pressure is typically 0.1 MPa or more and preferably 0.5 MPa or more. When the heat sealing pressure is in this range, suitable bonding can be ensured at the sealed portion. In the case of using a heat sealing tester equipped with a sealing bar, the heat sealing pressure is typically up to 1.0 MPa and preferably up to 0.75 MPa. When the heat sealing pressure is in this range, thinning of the sealed edge can be avoided to ensure a suitable seal strength.

The molded article described above may, for the purpose of physical property improvement, be combined with another molded article (such as a fiber, a yarn, a rope, a woven fabric, a knit, a non-woven fabric, paper, a film, a sheet, a tube, a plate, a rod, a container, a bag, a part, or a foam) made of a different material than the molded article described above. The material of the other molded article is also preferably biodegradable.

In the following items, preferred aspects of the present disclosure are listed. The present invention is not limited to the following items.

### [Item 1]

A laminate including, in order, a substrate layer (A), a bonding layer (B), and a resin layer (D) containing a poly(3-hydroxyalkanoate) copolymer (C), wherein
a glass transition temperature of a total resin material contained in the bonding layer (B) is from 20 to below 90°C,
the bonding layer (B) has a weight per square meter of 0.1 to less than 5.0 g/m², and
the resin layer (D) has a thickness of 5 to 100 µm.

### [Item 2]

The laminate according to item 1, wherein
the bonding layer (B) contains at least one resin selected from the group consisting of an acrylic resin, a vinyl chloride resin, a styrene-acrylic resin, a styrene-butadiene resin, a styrene-isoprene resin, a polycarbonate resin, a urea resin, a melamine resin, an epoxy resin, a phenol resin, a urethane resin, a diallyl phthalate resin, and an imine resin.

### [Item 3]

The laminate according to item 1 or 2, wherein
the bonding layer (B) contains at least an acrylic resin or a styrene-acrylic resin, and
a proportion of styrene units in the total acrylic or styrene-acrylic resin is from 0 to less than 50 mol%.

### [Item 4]

The laminate according to any one of items 1 to 3, wherein
the bonding layer (B) contains at least an acrylic resin or a styrene-acrylic resin, and
a proportion of methyl methacrylate units in (meth)acrylic units contained in the total acrylic or styrene-acrylic resin is from 50 to less than 95 mol%.

### [Item 5]

The laminate according to any one of items 1 to 4, wherein
the bonding layer (B) contains a tackifying resin in an amount of 1 to less than 30 wt% based on a total weight of the bonding layer (B).

### [Item 6]

The laminate according to item 5, wherein
the tackifying resin contains at least one resin selected from the group consisting of a rosin resin, a terpene resin, an ethylene resin, a vinyl acetate resin, an alkylphenol-formaldehyde resin, an alkylphenol-acetylene resin, a coumarone-indene resin, a styrene resin, and a xylene-formaldehyde resin.

### [Item 7]

The laminate according to item 5 or 6, wherein
the tackifying resin has a weight-average molecular weight of 100 to less than 5,000.

### [Item 8]

The laminate according to item 1 or 2, wherein
the poly(3-hydroxyalkanoate) copolymer (C) is poly(3-hydroxybutyrate-co-3-hydroxyhexanoate).

### [Item 9]

A laminate production method for producing the laminate according to any one of items 1 to 8, the method including:
forming the bonding layer (B) on at least one side of the substrate layer (A); and
forming the resin layer (D) on a surface of the bonding layer (B) by extrusion lamination or thermal lamination.

### [Item 10]

The laminate production method according to item 9, wherein
in the forming of the resin layer (D) by the extrusion lamination, a resin temperature immediately after melt extrusion from an end of a T-die is at or above a melting point of a component contained in the resin layer (D) and below 165°C.

### [Item 11]

The laminate production method according to item 9, wherein
in the thermal lamination, a film is used to form the resin layer (D), and
the film is formed under conditions where a resin temperature immediately after melt extrusion from an end of a T-die is at or above a melting point of a component contained in the resin layer (D) and below 165°C.

### [Item 12]

A molded article including the laminate according to any one of items 1 to 8.

### Examples

Hereinafter, the present invention will be specifically described based on examples. The technical scope of the present invention is not limited by the examples given below.

### [Production Examples]

### (Method for Preparing Coating Liquid)

Coating liquid 1: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 10/81/3/6, and the resulting polymer was diluted with a water/isopropanol mixture to obtain a coating liquid 1 having a solids concentration of 5%. The glass transition temperature of the obtained styrene-acrylic resin was 79°C.

Coating liquid 2: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 5/86/3/6, and the resulting polymer was diluted with a water/isopropanol mixture to obtain a coating liquid 2 having a solids concentration of 5%. The glass transition temperature of the obtained styrene-acrylic resin was 68°C.

Coating liquid 3: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 10/63/21/6, and the resulting polymer was diluted with a water/isopropanol mixture to obtain a coating liquid 3 having a solids concentration of 5%. The glass transition temperature of the obtained styrene-acrylic resin was 48°C.

Coating liquid 4: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 10/81/3/6, and the resulting polymer was diluted with a water/isopropanol mixture to obtain a coating liquid having a solids concentration of 5%. After that, the coating liquid and a solution of a rosin ester (RE-650 manufactured by Arakawa Chemical Industries, Ltd., weight-average molecular weight = 600) dissolved in a toluene/isopropanol mixture were mixed to obtain a coating liquid 4 in which the rosin ester constituted 5 wt% of the total amount of the styrene-acrylic resin and the rosin ester. The glass transition temperature of the total obtained mixture of the styrene-acrylic resin and the rosin ester was 66°C.

Coating liquid 5: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 10/81/3/6, and the resulting polymer was diluted with a water/isopropanol mixture to obtain a coating liquid having a solids concentration of 5%. After that, the coating liquid and a solution of a rosin ester (RE-650 manufactured by Arakawa Chemical Industries, Ltd., weight-average molecular weight = 600) dissolved in a toluene/isopropanol mixture were mixed to obtain a coating liquid 5 in which the rosin ester constituted 15 wt% of the total amount of the styrene-acrylic resin and the rosin ester. The glass transition temperature of the total obtained mixture of the styrene-acrylic resin and the rosin ester was 62°C.

Coating liquid 6: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 10/81/3/6, and the resulting polymer was diluted with a water/isopropanol mixture to obtain a coating liquid having a solids concentration of 5%. After that, the coating liquid and a solution of a rosin ester (RE-2160 manufactured by Arakawa Chemical Industries, Ltd., weight-average molecular weight = 2160) dissolved in a toluene/isopropanol mixture were mixed to obtain a coating liquid 6 in which the rosin ester constituted 5 wt% of the total amount of the styrene-acrylic resin and the rosin ester. The glass transition temperature of the total obtained mixture of the styrene-acrylic resin and the rosin ester was 71°C.

Coating liquid 7: Methyl methacrylate, 2-ethylhexyl methacrylate, and methacrylic acid (all of which are manufactured by Tokyo Chemical Industry Co., Ltd.) were polymerized at a methyl methacrylate/2-ethylhexyl methacrylate/methacrylic acid molar ratio of 91/3/6, and the resulting polymer was diluted with a water/isopropanol mixture to obtain a coating liquid 7 having a solids concentration of 5%. The glass transition temperature of the obtained acrylic resin was 87°C.

Coating liquid 8: Styrene, methyl methacrylate, 2-ethylhexyl methacrylate, and methacrylic acid (all of which are manufactured by Tokyo Chemical Industry Co., Ltd.) were polymerized at a styrene/methyl methacrylate/2-ethylhexyl methacrylate/methacrylic acid molar ratio of 10/45/39/6, and the resulting polymer was diluted with a water/isopropanol mixture to obtain a coating liquid 8 having a solids concentration of 5%. The glass transition temperature of the obtained styrene-acrylic resin was 16°C.

Coating liquid 9: Styrene, methyl methacrylate, and methacrylic acid (all of which are manufactured by Tokyo Chemical Industry Co., Ltd.) were polymerized at a styrene/methyl methacrylate/methacrylic acid molar ratio of 40/54/6, and the resulting polymer was diluted with a water/isopropanol mixture to obtain a coating liquid 9 having a solids concentration of 5%. The glass transition temperature of the obtained styrene-acrylic resin was 94°C.

### (PHBH Powder)

A PHBH powder produced according to a method described in WO 2019-142845 was used. The details of the composition of the PHBH powder are as follows.

PHBH powder: PHBH powder in which the PHBH has a weight-average molecular weight of 59 × 10⁴ and the proportion of 3HH to the total amount of 3HB and 3HH in the PHBH is 15 mol%.

### (Method for Producing PHBH Pellets)

PHBH pellets: The PHBH powder (100 parts by weight) was dry-blended with behenamide (0.5 parts by weight) and pentaerythritol (1.0 parts by weight) and the blend was melted, kneaded, and extruded as a strand by using a twin-screw extruder at a set temperature of 150°C and a screw rotational speed of 100 rpm. The strand was solidified by passing it through 40°C hot water, and the solidified strand was cut into pellets. The weight-average molecular weight measured for the pellets was 55 × 10⁴.

<Laminate Production by Extrusion Lamination>

### (Example 1)

A4 size base paper with a weight per square meter of 210 g/m² was coated with the coating liquid 1 by means of a bar coater No. 10. The coated paper was then immediately dried for 30 seconds in a hot air oven heated to 100°C, and thus a bonding layer (B) was formed on the paper substrate. The obtained bonding layer (B) had a weight per square meter of 1.0 g/m².

Subsequently, the PHBH pellets were placed into a single-screw extruder equipped with a T-die, and a melt of the pellets was extruded from the T-die under conditions where the resin temperature was 163°C immediately after the extrusion. The extruded material was taken up by a cooling roll set to 60°C and shaped into a film with a thickness of 30 µm. The bonding layer (B)-coated paper substrate obtained as above and the PHBH film were pressed together between a heating roll and a cooling roll in such a manner that the heating roll was in contact with the paper surface and the cooling roll was in contact with the PHBH film, and the conditions were adjusted to control the surface temperature of the PHBH film to 170°C. As a result, a laminate was obtained which included, in order, the paper substrate, the bonding layer (B), and the resin layer (D).

### (Example 2)

A laminate was obtained in the same manner as in Example 1, except that the base paper was coated with the coating liquid 1 by means of a bar coater No. 2. The weight per square meter of the bonding layer (B) was 0.2 g/m².

### (Example 3)

A laminate was obtained in the same manner as in Example 1, except that the base paper was coated with the coating liquid 1 by means of a bar coater No. 45. The weight per square meter of the bonding layer (B) was 4.5 g/m².

### (Example 4)

A laminate was obtained in the same manner as in Example 1, except that the thickness of the PHBH film used to form the resin layer (D) was changed to 10 µm.

### (Example 5)

A laminate was obtained in the same manner as in Example 1, except that the thickness of the PHBH film used to form the resin layer (D) was changed to 70 µm.

### (Example 6)

A laminate was obtained in the same manner as in Example 1, except that the bonding layer (B) was formed using the coating liquid 2.

### (Example 7)

A laminate was obtained in the same manner as in Example 1, except that the bonding layer (B) was formed using the coating liquid 3.

### (Example 8)

A laminate was obtained in the same manner as in Example 1, except that the bonding layer (B) was formed using the coating liquid 4.

### (Example 9)

A laminate was obtained in the same manner as in Example 1, except that the bonding layer (B) was formed using the coating liquid 5.

### (Example 10)

A laminate was obtained in the same manner as in Example 1, except that the bonding layer (B) was formed using the coating liquid 6.

### (Example 11)

A laminate was obtained in the same manner as in Example 1, except that the bonding layer (B) was formed using the coating liquid 7.

### (Comparative Example 1)

A laminate was obtained in the same manner as in Example 1, except that the base paper without any bonding layer (B) was laminated with PHBH by extrusion lamination. The laminate was devoid of any bonding layer (B) and consisted of the paper substrate and the resin layer (D).

### (Comparative Example 2)

A laminate was obtained in the same manner as in Example 1, except that the bonding layer (B) was formed using the coating liquid 8.

### (Comparative Example 3)

A laminate was obtained in the same manner as in Example 1, except that the bonding layer (B) was formed using the coating liquid 9.

### (Comparative Example 4)

A laminate was obtained in the same manner as in Example 1, except that the thickness of the PHBH film used to form the resin layer (D) was changed to 3 µm.

### (Comparative Example 5)

A laminate was obtained in the same manner as in Example 1, except that the base paper was coated with the coating liquid 1 by means of a bar coater No. 75. The weight per square meter of the bonding layer (B) was 7.5 g/m².

### [Evaluation Methods]

Evaluations were performed in Examples and Comparative Examples by the methods described below.

### (Evaluation of Lamination Strength)

A lamination strength test was conducted one or more days after the extrusion lamination. Specifically, the surface of the resin layer (D) of the obtained laminate was cut with a cutter blade to make a shallow crosscut pattern, then a tape, Nichiban No. CT-17, was securely attached to the cut region and then peeled in part by hand to define the origin of delamination. After that, the sample was cut into a 15-mm-wide piece, and the cut piece was subjected to a peel strength test in which the cut piece was held by a jig in such a position that the lamination layer separated and the paper would form an angle of 180°. The tensile speed was 200 mm/min. The peel tester used was Shimadzu Autograph EZ-LX (manufactured by Shimadzu Corporation).

### <Ratings>

Excellent: 4.0 N/15 mm or more
Good: From 3.0 to less than 4.0 N/15 mm
Average: From 2.0 to less than 3.0 N/15 mm
Poor: Less than 2.0 N/15 mm

The rating "Excellent", "Good", or "Average" means that the lamination strength is sufficient.

### (Evaluation of Drying Properties)

Using the conditions described in each of Examples and Comparative Examples, A4 size base paper with a weight per square meter of 210 g/m² was coated to form a bonding layer (B). The paper coated with the bonding layer (B) was then heated by a hot air oven at 100°C for 30 seconds, after which the coated paper was taken out of the hot air oven and the surface of the bonding layer (B) was inspected.

### <Ratings>

Good: The surface is not wet and the formed coating is satisfactory.

Average: The surface is somewhat wet but the formed coating is satisfactory.

Poor: The surface carries a water pool and the formed coating is unsatisfactory.

The rating "Good" or "Average" means that drying and coating formation can be accomplished in a common papermaking process.

### (Measurement of Weight per Square Meter of Bonding Layer (B))

Each of the sheets of bonding layer (B)-coated paper obtained in Examples and Comparative Examples was thoroughly dried for 10 minutes in a hot air oven heated to 100°C, and the dried coated paper was aged at a temperature of 25°C and a humidity of 60% for 1 week. The aged coated paper was cut into a 10 cm × 10 cm piece, the weight of which was measured. The weight of the base paper was subtracted from the measured weight, and the difference was multiplied by 100 to determine the weight per square meter of the bonding layer (B).

(Measurement of Glass Transition Temperature of Total Resin Material Contained in Bonding Layer (B))

The glass transition temperature of the total resin material contained in the bonding layer (B) was measured by differential thermal analysis. Specifically, part of each of the coating liquids obtained as described in Production Examples was placed into a metal container, and the coating liquid held in the metal container was dried for 30 minutes in a hot air oven set to 100°C. An amount of 3 mg of the resulting solid product was weighed out and analyzed using a differential scanning calorimeter (NETZSCH Polyma 214). In the calorimetry, the temperature was increased from 0 to 150°C at a rate of 10°C/min to obtain a temperature dependence curve. The obtained result was differentiated with respect to temperature to determine an inflection point, and the temperature at the inflection point was determined as the glass transition temperature.

**[Table 1]**

| | Bonding layer (B) | | | | | | | | | Resin layer (D) | | Evaluation results | | |
|---|---|---|---|---|---|---|---|---|---|---|---|---|---|---|
| | Type of resin | Weight per square meter | Glass transition temperature | Proportion of styrene units | Proportion of (meth)acrylic units | Proportion of MMA in (meth)acrylic units | Tackifying resin | | | Thickness | Extrusion temperature | Lamination strength (180° peel strength) | | Drying properties |
| | | (g/m²) | (°C) | (mol%) | (mol%) | (mol%) | Type | Mw | Amount (wt%) | (µm) | (°C) | (N/15 mm) | Rating | Rating |
| Ex. 1 | Acrylic-styrene resin | 1.0 | 79 | 10 | 90 | 90 | - | - | - | 30 | 163 | 3.2 | Good | Good |
| Ex. 2 | Acrylic-styrene resin | 0.2 | 79 | 10 | 90 | 90 | - | - | - | 30 | 163 | 2.8 | Average | Good |
| Ex. 3 | Acrylic-styrene resin | 4.5 | 79 | 10 | 90 | 90 | - | - | - | 30 | 163 | 3.6 | Good | Average |
| Ex. 4 | Acrylic-styrene resin | 1.0 | 79 | 10 | 90 | 90 | - | - | - | 10 | 163 | 2.1 | Average | Good |
| Ex. 5 | Acrylic-styrene resin | 1.0 | 79 | 10 | 90 | 90 | - | - | - | 70 | 163 | 4.6 | Excellent | Good |
| Ex. 6 | Acrylic-styrene resin | 1.0 | 68 | 5 | 95 | 90 | - | - | - | 30 | 163 | 2.8 | Average | Good |
| Ex. 7 | Acrylic-styrene resin | 1.0 | 48 | 10 | 90 | 70 | - | - | - | 30 | 163 | 2.8 | Average | Good |
| Ex. 8 | Acrylic-styrene resin | 1.0 | 66 | 10 | 90 | 90 | Rosin resin | 600 | 5 | 30 | 163 | 3.9 | Good | Good |
| Ex. 9 | Acrylic-styrene resin | 1.0 | 62 | 10 | 90 | 90 | Rosin resin | 600 | 15 | 30 | 163 | 4.2 | Excellent | Good |
| Ex. 10 | Acrylic-styrene resin | 1.0 | 71 | 10 | 90 | 90 | Rosin resin | 2160 | 5 | 30 | 163 | 3.4 | Good | Good |
| Ex. 11 | Acrylic resin | 1.0 | 87 | 0 | 100 | 91 | - | - | - | 30 | 163 | 2.9 | Average | Good |
| Comp. 1 | - | - | - | - | - | - | - | - | - | 30 | 163 | 0.6 | Poor | Good |
| Comp. 2 | Acrylic-styrene resin | 1.0 | 16 | 10 | 90 | 50 | - | - | - | 30 | 163 | 1.4 | Poor | Good |
| Comp. 3 | Acrylic-styrene resin | 1.0 | 94 | 60 | 40 | 90 | - | - | - | 30 | 163 | 1.8 | Poor | Good |
| Comp. 4 | Acrylic-styrene resin | 1.0 | 79 | 10 | 90 | 90 | - | - | - | 3 | 163 | 1.1 | Poor | Good |
| Comp. 5 | Acrylic-styrene resin | 7.5 | 79 | 10 | 90 | 90 | - | - | - | 30 | 163 | 4.2 | Excellent | Poor |

### <Results>

Table 1 reveals that in Examples the substrate layer (A) and the resin layer (D) containing the poly(3-hydroxyalkanoate) copolymer (C) were bonded strongly enough via the bonding layer (B) and that the bonding layer (B) exhibited good drying properties after the coating process.

In contrast, the interlayer adhesion was insufficient in Comparative Examples 1 to 4, and the drying properties were poor in Comparative Example 5. This demonstrates that high adhesion and good drying properties were not achieved at the same time in Comparative Examples.

### Reference Signs List

- 1: laminate
- 2: substrate layer
- 3: bonding layer (B)
- 4: resin layer (D)

## Claims

1. A laminate comprising, in order, a substrate layer (A), a bonding layer (B), and a resin layer (D) comprising a poly(3-hydroxyalkanoate) copolymer (C), wherein
a glass transition temperature of a total resin material contained in the bonding layer (B) is from 20 to below 90°C,
the bonding layer (B) has a weight per square meter of 0.1 to less than 5.0 g/m², and
the resin layer (D) has a thickness of 5 to 100 µm.

2. The laminate according to claim 1, wherein
the bonding layer (B) comprises at least one resin selected from the group consisting of an acrylic resin, a vinyl chloride resin, a styrene-acrylic resin, a styrene-butadiene resin, a styrene-isoprene resin, a polycarbonate resin, a urea resin, a melamine resin, an epoxy resin, a phenol resin, a urethane resin, a diallyl phthalate resin, and an imine resin.

3. The laminate according to claim 1 or 2, wherein
the bonding layer (B) comprises at least an acrylic resin or a styrene-acrylic resin, and
a proportion of styrene units in the total acrylic or styrene-acrylic resin is from 0 to less than 50 mol%.

4. The laminate according to claim 1 or 2, wherein
the bonding layer (B) comprises at least an acrylic resin or a styrene-acrylic resin, and
a proportion of methyl methacrylate units in (meth)acrylic units contained in the total acrylic or styrene-acrylic resin is from 50 to less than 95 mol%.

5. The laminate according to claim 1 or 2, wherein
the bonding layer (B) comprises a tackifying resin in an amount of 1 to less than 30 wt% based on a total weight of the bonding layer (B).

6. The laminate according to claim 5, wherein
the tackifying resin comprises at least one resin selected from the group consisting of a rosin resin, a terpene resin, an ethylene resin, a vinyl acetate resin, an alkylphenol-formaldehyde resin, an alkylphenol-acetylene resin, a coumarone-indene resin, a styrene resin, and a xylene-formaldehyde resin.

7. The laminate according to claim 5, wherein
the tackifying resin has a weight-average molecular weight of 100 to less than 5,000.

8. The laminate according to claim 1 or 2, wherein
the poly(3-hydroxyalkanoate) copolymer (C) is poly(3-hydroxybutyrate-co-3-hydroxyhexanoate).

9. A laminate production method for producing the laminate according to claim 1 or 2, the method comprising:
forming the bonding layer (B) on at least one side of the substrate layer (A); and
forming the resin layer (D) on a surface of the bonding layer (B) by extrusion lamination or thermal lamination.

10. The laminate production method according to claim 9, wherein
in the forming of the resin layer (D) by the extrusion lamination, a resin temperature immediately after melt extrusion from an end of a T-die is at or above a melting point of a component contained in the resin layer (D) and below 165°C.

11. The laminate production method according to claim 9, wherein
in the thermal lamination, a film is used to form the resin layer (D), and
the film is formed under conditions where a resin temperature immediately after melt extrusion from an end of a T-die is at or above a melting point of a component contained in the resin layer (D) and below 165°C.

12. A molded article comprising the laminate according to claim 1 or 2.
